# EUROPÄISCHE PATENTSCHRIFT

(11) **EP 1 687 126 B1**
(45) Veröffentlichungstag und Bekanntmachung des Hinweises auf die Patenterteilung: **25.07.2007**
(21) Anmeldenummer: 04786826.0
(22) Anmeldetag: 23.09.2004
(51) Int. Cl.: B28D 1/14, B23B 51/02

(54) **BOHR- UND/ODER MEISSELWERKZEUG**
DRILLING AND/OR CHISELLING TOOL
OUTIL DE PERCAGE ET/OU DE COUPE

(30) Priorität: 17.11.2003 DE 10353730; 05.04.2004 DE 102004017286
(43) Veröffentlichungstag der Anmeldung: 09.08.2006
(73) Patentinhaber: ROBERT BOSCH GMBH, 70442 Stuttgart (DE)
(72) Erfinder: WIDMANN, Rainer, 88213 Ravensburg (DE); MOSER, Bernhard, 88361 Altshausen (DE)
(86) Internationale Anmeldenummer: PCT/DE2004/002109
(87) Internationale Veröffentlichungsnummer: WO 2005/049295

(56) Entgegenhaltungen:
- EP-A1- 0 761 927
- DE-A1- 10 208 630

## Beschreibung

Die Erfindung betrifft ein Bohr- und/oder Meißelwerkzeug nach dem Oberbegriff des Anspruchs 1, wie es aus der DE 10 208 630 bekannt ist.

Aus dem Stand der Technik sind außerdem aus den Druckschriften EP 0 761 927 A1, DE 100 38 039 A1 und DE 44 06 513 A1 Werkzeuge bekannt, welche ein im Werkzeugkopf bearbeitungsseitig angeordnetes Hartmetallschneidelement aufweisen, wobei ein radial außen liegender, zweiter Wirkbereich des Hartmetallschneidelements gegenüber einem zentrischen, ersten Wirkbereich des Hartmetallschneidelements zurückversetzt ist und die beiden Wirkbereiche über einen dritten Wirkbereich ineinander übergehen. Versuche mit entsprechenden Werkzeugen haben gezeigt, dass insbesondere beim Anbohren von Beton oder von blecharmierten Verschalungen bzw. von Blechverschalungen ein Bohrlochquerschnitt entsteht, welcher in seiner geometrischen Form etwa einem sogenannten Reuleaux-Dreieck entspricht. Dieser Bohrlochquerschnitt ist typisch für Bohrer mit zwei Schneidkanten und seine Entstehung ist durch das Hängenbleiben der äußeren Enden der Schneidkanten an der Bohrlochwand oder am Bohrlochrand zu erklären. Der Punkt an welchem die Schneidkante hängen bleibt wird kurzzeitig zum Drehpunkt für das gesamte Werkzeug und es entsteht eine für das Reuleaux-Dreieck typische, nach außen gewölbte Seitenkante. Bei Werkzeugen mit drei Hauptscheiden entstehen Bohrlochquerschnitte, welche als Vierecke mit nach außen gewölbten Seitenkanten ausgebildet sind. Diese von der Kreisform abweichenden Bohrlochquerschnitte führen beispielsweise zu Schwierigkeiten beim Einsetzen von Metalldübeln, da diese für kreisrunde Querschnitte bzw. zylindrische Bohrlöcher ausgelegt sind: Der im Releaux-Dreieck verfügbare Innenkreis ist für die Dübel zu klein.

Aufgabe der Erfindung ist es, ein Bohr- und/oder Meißelwerkzeug zu entwickeln, welches geeignet ist Bohrlöcher zu erstellen, deren Mantelfläche über die gesamte Bohrlochtiefe und insbesondere auch im Bereich des Bohrlochrandes einer kreisrunden Zylinderfläche entspricht und insbesondere das passgenaue Einsetzen von Dübeln erlaubt.

Diese Aufgabe wird ausgehend von einem Bohr- und/oder Meißelwerkzeug nach dem Oberbegriff des Anspruchs 1 durch die kennzeichnenden Merkmale des Anspruchs 1 gelöst. In den Unteransprüchen sind vorteilhafte und zweckmäßige Weiterbildungen des im Anspruch 1 beschriebenen Werkzeugs angegeben.

Der Erfindung liegt die Erkenntnis zugrunde, dass ein kreisrunder Querschnitt des Bohrlochs nur dann erzielt werden kann, wenn verhindert wird, dass sich das Bohr- und/oder Meißelwerkzeug immer dann, wenn eine Hauptschneide an der Bohrlochwand oder am Bohrlochrand hängen bleibt, um eine parallel zu seiner Längsachse verlaufende exzentrische Drehachse drehen kann. Um solche kurzzeitigen Verlagerungen der Drehachse zu vermeiden wurde erfindungsgemäß die Zentrierwirkung des Bohr- und/oder Meißelwerkzeugs so verstärkt, dass die Längsachse auch dann noch Drehachse bleibt, wenn das Bohr- und/oder Meißelwerkzeug an der Bohrlochwand oder am Bohrlochrand hängen bleibt. Diese erhöhte Zentrierwirkung wird erfindungsgemäß durch wenigstens eine speziell ausgebildete Fläche im dritten Wirkbereich des Bohr- und/oder Meißelwerkzeugs erreicht, die als Teil einer rotationssymmetrischen Fläche insbesondere einer Kegelmantelfläche oder Kugelmantelfläche ausgebildet ist. Die Kegelmantelfläche bewirkt im Gegensatz zu einer schräg zur Bohrerlängsachse stehenden ebenen Fläche oder einer parallel zur Bohrerlängsachse stehenden zylindrischen Fläche eine stärkere Zentrierung des Bohr- und/oder Meißelwerkzeugs, da ständig die gesamte Fläche mit dem zu bearbeitenden Material in Kontakt steht. Somit stützt sich das Bohr- und/oder Meißelwerlczeug beim Hängenbleiben im dritten Wirkbereich nicht nur mittels einer Kante oder einer aufgrund des gleichbleibenden Querschnitts locker geführten Zylinderfläche am zu bearbeitenden Material ab, sondern weist einen dichten, vollflächigen Kontakt zum zu bearbeitenden Material auf. Hierdurch bleibt die zentrische Drehachse auch bei größeren Querkräften erhalten, da sich über diese spezielle Fläche ausreichend große Gegenkräfte aufbringen lassen.

Weiterhin sieht die Erfindung vor, im dritten Wirkbereich des Bohr- und/oder Meißelwerkzeugs wenigstens zwei Teilmantelflächen auszubilden, welche symmetrisch zu der Längsachse des Bohr- und/oder Meißelwerkzeugs ausgerichtet sind. Hierdurch ist es möglich jeder Hauptschneide eine Teilmantelfläche zuzuordnen und diese so zu positionieren, dass die gegebenenfalls beim Hängenbleiben der äußeren Enden der Hauptschneide entstehenden Kräfte optimal abgefangen werden können.

Erfindungsgemäß ist es vorgesehen, die Teilmantelflächen in Richtung der Längsachse des Bohr- und/oder Meißelwerkzeugs durch Kurven mit unterschiedlicher Krümmung zu begrenzen. Hierdurch entstehen Bereiche, welche einem Rundmeißel ähnlich sind und mit geringem Widerstand in das zu bearbeitende Material eindringen.

Es ist vorgesehen, die Teilmantelfläche zu der Längsachse des Bohr- und/oder Meißelwerkzeugs mit einem Winkel von 0° < α < 45° und insbesondere 5° bis 25° auszubilden. Hierdurch ist ein leichtes Eindringen des dritten Wirkbereichs in das Material gewährleistet. Weiterhin wird durch die relativ steile Ausrichtung der Teilmantelfläche verhindert, dass diese im Bohr- und/oder Meißelbetrieb das an dieser anliegende Material zu stark bearbeitet und somit die Stützkraft des ihr gegenüberliegenden Materials zu stark mindert.

Erfindungsgemäß bilden der zentrische, erste Wirkbereich und der dritte Wirkbereich zusammen eine Zentrierspitze, welche über den außen liegenden, zweiten Wirkbereich in Wirkrichtung hervorragt. Diese aus zwei Bereichen, einem zentrischen ersten Bereich und einem ringförmigen, dritten Bereich bestehenden Zentrierspitze kann auch als Zentrierspitze bezeichnet werden, welche einen aktiven, den Vorschub fördernden zentrischen Bereich und einen zentrierenden, die Vorschubrichtung sichernden ringförmigen Bereich aufweist und somit auf zwei unterschiedliche Aufgaben optimiert ist.

Weiterhin ist es vorgesehen, die Schneidkanten des zentrischen, ersten Wirkbereichs dachförmig anzuordnen. Hierdurch wird das punktgenaue Anbohren erleichtert.

Die Erfindung sieht vor, die Hauptscheidkanten des radial außen liegenden, zweiten Wirkbereichs dachförmig auszurichten. Hierdurch ist das Eindringen des Werkzeugs in das zu bearbeitende Material erleichtert.

Durch die Ausbildung des Hartmetallschneidelements als Vollhartmetallkopf oder als Schneidplatte ist es möglich die erfindungsgemäße Schneidelementgeometrie für die gängigen Bauformen von Bohr- und/oder Meißelwerkzeugen zu nutzen.

Die Erfindung sieht vor, das Hartmetallschneidelement mehrteilig auszubilden und insbesondere aus wenigstens einer Scheidplatte und einer Zentrierspitze zusammenzusetzen. Hierdurch ist es möglich für das Hartmetallschneidelement unterschiedliche Hartmetalle zu verwenden und diese für die speziellen Belastungen auszuwählen.

Erfindungsgemäß ist es vorgesehen, der Hauptschneidkante des zweiten Wirkbereichs eine Freifläche zuzuordnen, welche in Richtung der Längsachse des Bohr- und/oder Meißelwerkzeugs betrachtet radial nach außen durch eine Klothoide oder einen dieser angenäherten Polygonzug begrenzt ist. Hierdurch ist eine besondere massive Ausbildung der Umgebung der Hauptschneide möglich. Durch eine derartige Ausbildung ist die Eigenstabilität des Hartmetallschneidelements erhöht und erlaubt gegenüber herkömmlichen Hartmetallschneidelementen die Verwendung härterer Hartmetalle. Durch deren Verwendung erreicht wiederum das Werkzeug eine höhere Standzeit. Weiterhin dienen die großen Freiflächen als Abstützung beim Bohren im Bereich von Armierungen.

Erfindungsgemäß ist es auch vorgesehen, eine Spanfläche einer im zweiten Wirkbereich auf die Hauptschneide folgenden Nebenschneide durch eine Weiterführung der Klothoide bzw. des Polygonzugs radial nach außen zu begrenzen. Hierdurch lässt sich die massive Ausgestaltung des Hartmetallschneidelements mit den oben genannten Vorteilen für das gesamte Hartmetallschneidelement erreichen.

Eine vorteilhafte Ausgestaltung der Erfindung sieht vor, die Freifläche der Hauptschneidkante des zweiten Wirkbereichs und die Schneidfläche der Nebenschneide des zweiten Wirkbereichs als gemeinsame gewölbte Fläche ausbilden, welche keine Kanten aufweist.

Der massive Charakter des Hartmetallschneidelements wird noch weiter erhöht, wenn auch die Freifläche der Nebenschneidkante des zweiten Wirkbereichs in Draufsicht betrachtet radial nach außen durch eine Fortsetzung der Klothoide oder des dieser angenäherten Polygonzugs begrenzt ist.

Schließlich sieht die Erfindung vor, die Spanflächen und die Freiflächen der Hauptschneiden und der Nebenschneiden des zweiten Wirkbereichs in Draufsicht durch eine etwa S-förmige Kontur zu begrenzen. Hierdurch entsteht ein massives Hartmetallschneidelement mit hoher Eigenstabilität.

Weitere Einzelheiten und Vorteile der Erfindung ergeben sich aus der nachfolgenden Beschreibung von Ausführungsbeispielen der Erfindung, die anhand der Figuren näher erläutert werden.

Hierbei zeigt:
Figur 1: eine Draufsicht auf ein Hartmetallschneidelement in Richtung der Längsachse des Bohr- und/oder Meißelwerkzeugs,
Figur 2a: einen Schnitt durch das in der Figur 1 gezeigte Hartmetallschneidelement entlang der Schnittlinie B-B,
Figur 2b: eine Detailvergrößerung der Figur 2a,
Figur 3a: einen Schnitt durch das in der Figur 1 gezeigte Hartmetallschneidelement entlang der Schnittlinie C-C,
Figur 3b: eine Detailvergrößerung der Figur 3a,
Figur 4a:einen Schnitt durch das in der Figur 1 gezeigte Hartmetallschneidelement entlang der Schnittlinie D-D,
Figur 4b: eine Detailvergrößerung der Figur 4a,
Figur 5a: einen Schnitt durch das in der Figur 1 gezeigte Hartmetallschneidelement entlang der Schnittlinie A-A,
Figur 5b: eine Detailvergrößerung der Figur 5a,
Figur 6: eine Seitenansicht des in der Figur 1 gezeigten Hartmetallschneidelements aus einer Pfeilrichtung E,
Figur 7: eine Unteransicht des in der Figur 1 gezeigten Hartmetallschneidelements,
Figur 8: eine Seitenansicht des in der Figur 1 gezeigten Hartmetallschneidelements aus einer Pfeilrichtung F,
Figur 9: eine perspektivische Ansicht des in den Figuren 1 bis 8 gezeigten Hartmetallschneidelements,
Figur 10: eine weitere perspektivische Ansicht des in den Figuren 1 bis 8 gezeigten Hartmetallschneidelements,
Figur 11a-11c: Seitenansichten verschiedener Hartmetallschneidelemente,
Figur 12a-12g: Detailansichten verschiedener Hartmetallschneidelemente und
Figur 13: eine schematische Draufsicht auf Hartmetallschneidelemente gemäß den Figuren 11a-12g.

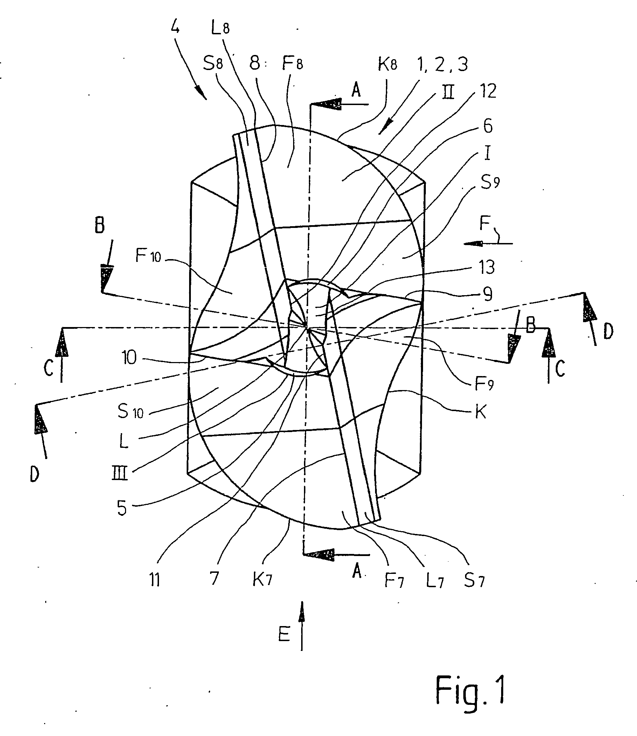

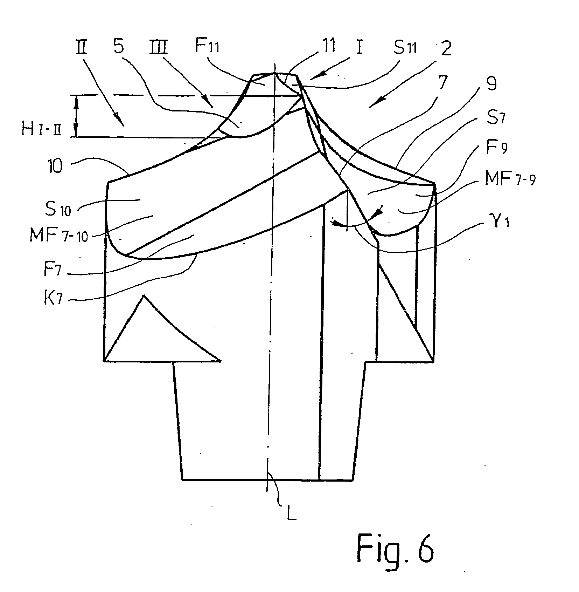

In der Figur 1 ist eine Draufsicht auf ein Hartmetallschneidelement 1 dargestellt, welches als Vollhartmetallkopf 2 ausgebildet ist. Der Vollhartmetallkopf 2, welcher einen Bohrerkopf 3 bildet, sitzt auf einem nicht dargestellten Wendelschaft, welcher wiederum in einen nicht dargestellten Einspannschaft bzw. ein nicht dargestelltes Einspannende übergeht. Zusammen mit dem Wendelschaft und dem Einspannschaft bildet der Bohrerkopf 3 einen Hammerbohrer bzw. ein Bohr- und/oder Meißelwerkzeug 4. Der Einspannschaft ist als sogenannter SDS-plus-Einspannschaft oder SDS-MAX-Einspannschaft ausgebildet. Der Bohrerkopf 3 bzw. der Vollhartmetallkopf 2 weist in seiner Grundkonzeption einen ersten zentrischen Wirkbereich I und einen zweiten gegenüber dem ersten Wirkbereich I zurückversetzten etwa ringförmigen Wirkbereich II auf, wobei die beiden Wirkbereiche I und II über einen dritten, etwa ringförmigen Wirkbereich III ineinander übergehen. Der dritte Wirkbereich III überbrückt eine Höhendifferenz H_{I-II} (siehe Figur 6) zwischen den Wirkbereichen I und II. Der dritte Wirkbereich III weist zwei Teilmantelflächen 5 und 6 auf, welche als Teilflächen eines nicht dargestellten imaginären Kegels ausgebildet sind, dessen Längsachse auf einer Längsachse L des Hammerbohrers 4 liegt. Die Teilmantelflächen 5 und 6 sind jeweils in der Verlängerung der im zweiten Wirkbereich II liegenden Hauptschneiden 7 bzw. 8 angeordnet. Der Vollhartmetallkopf ist mit allen drei Wirkbereichen I, II und III spiegelsymmetrisch zur Längsachse L ausgebildet. Den Hauptschneidkanten 7 und 8 ist jeweils eine Spanfläche S₇ bzw. S₈ und eine Freifläche F₇ bzw. F₈ zugeordnet. Die Freiflächen F₇ und F₈ sind in Draufsicht radial nach außen jeweils durch Klothoiden K₇ und K₈ begrenzt. Gemäß einer nicht dargestellten Ausführungsvariante sind diese durch Polygonzüge begrenzt. Quer zu den Hauptschneidkanten 7 und 8 sind im Wirkbereich II Nebenschneidkanten 9 und 10 angeordnet, welche jeweils eine Freifläche F₉ bzw. F₁₀ und eine Spanfläche S₉ bzw. S₁₀ aufweisen. Die Freifläche F₈ der Hauptschneide 8 geht kantenfrei in die Spanfläche S₉ der Nebenschneidkante 9 über. Hierbei sind die Spanfläche S₉ und die Freifläche F₉ radial nach außen durch die an der Nebenscheidkante 9 vorbeilaufende Klothoide K₈ begrenzt. Ebenso geht die Freifläche F₇ der Hauptschneidkante 7 kantenfrei in die Spanfläche S₁₀ der Nebenschneidkante 10 über. Hierbei sind die Spanfläche S₁₀ und die Freifläche F₁₀ radial nach außen durch die an der Nebenscheidkante 10 vorbeilaufende Klothoide K₇ begrenzt.

In der Draufsicht liegen die Wirkbereiche I, II und III innerhalb einer maßgeblich durch die Klothoiden K₇ und K₈ bestimmten, s-förmig geschwungenen Kontur K, welche nur im Bereich der Hauptschneidkanten 7 und 8 kantig ausgebildet ist.

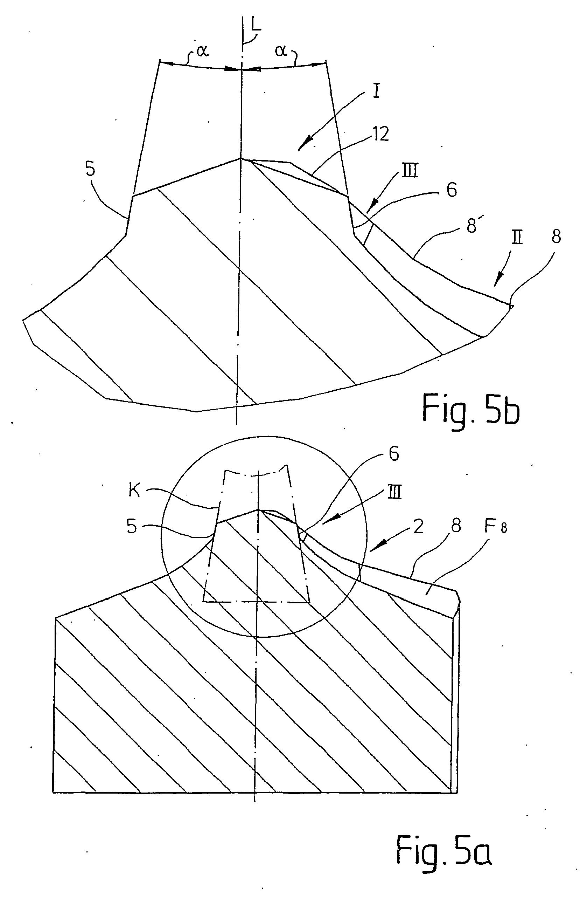

Der dritte Wirkbereich III ist im wesentlichen durch die Teilmantelflächen 5 und 6 charakterisiert, welche den Hammerbohrer 4 im Bohrloch führen, sobald der Wirkbereich I in das zu bearbeitende Material eingedrungen ist. Durch die Ausführung der Teilmantelflächen 5 und 6 als Ausschnitte einer Kegelmantelfläche K (siehe Figur 5a) ist bei der Drehbewegung des Hammerbohrers 4 im Gegensatz zu schräg zur Längsachse L des Hammerbohrers 4 stehenden ebenen Flächen ständig ein flächiger Kontakt zu dem zu bearbeitenden Material gewährleistet bzw. eine großflächige Abstützung des Bohrerkopfs 3 am Material gegeben. Der zur Längsachse L des Hammerbohrers 4 geneigte Verlauf der Teilmantelflächen 5 und 6 bewirkt, dass die Teilmantelflächen 5 und 6 beim Bohrfortschritt durch das keilartige Eindringen in das Material im Gegensatz zu Teilmantelflächen eines Zylinders ständig in Vorschubrichtung auf das Material einwirken und hierdurch der Kontakt zu diesem ständig erneut aufgebaut wird. Dies führt zu einer wirksameren Abstützung des Bohrerkopfs 3 mittels der Teilmantelflächen 5 und 6 am zu bearbeitenden Material, so dass ein ungewünschtes Drehen des Hammerbohrers 4 um eine außerhalb der Längsachse L des Hammerbohres 4 liegende Drehachse L₇ oder L₈ verhinderbar ist. Bei herkömmlichen Hammerbohrern existieren diese exzentrischen Drehachsen immer dann kurzfristig, wenn eine Schneidkante am zu bearbeitenden Material hängen bleibt.

Der Wirkbereich I ist im wesentlichen durch Schneidkanten 11 und 12 bestimmt, welche vor den Teilmantelflächen 5 und 6 in das zu bearbeitende Material eindringen. Der Wirkbereich I mit seiner Bohr- und Hammerfunktion und der Wirkbereich II mit seiner Zentrierungs- bzw. Abstützfunktion bilden zusammen eine Zentrierspitze 13, welche optimal auf die Bearbeitung von Beton, Gestein, Mauerwerk und der gleichen Materialien ausgelegt ist.

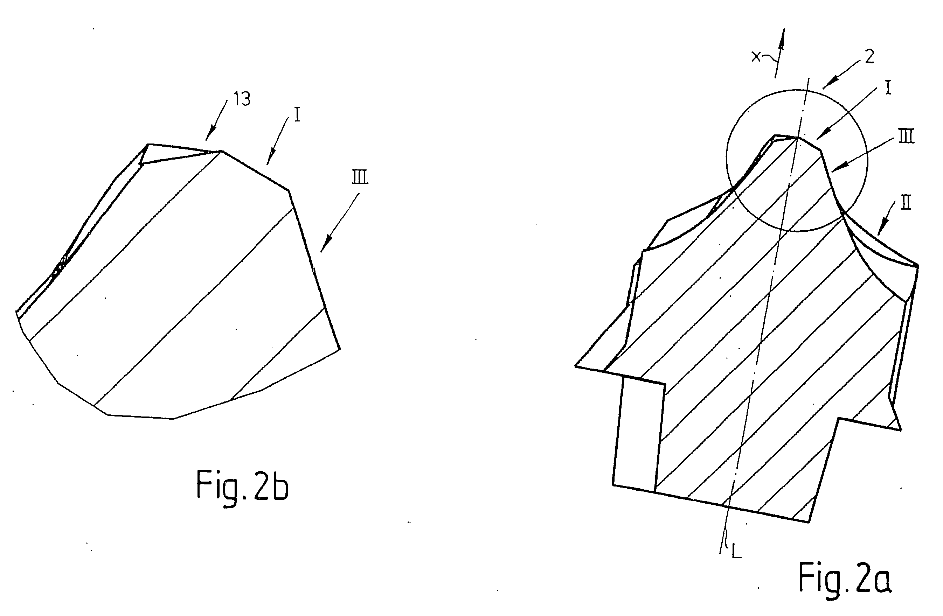

In der Figur 2a ist ein Schnitt durch den in der Figur 1 dargestellten Vollhartmetallkopf 2 entlang der Schnittlinie B-B gezeigt. In dieser Ansicht ist erkennbar wie die Wirkbereiche I, II und III in Richtung der Längsachse L zueinander versetzt sind. Dem leicht dachförmigen Wirkbereich I folgt der diesen umgreifende, steile Wirkbereich III und diesen umschließt der wiederum dachförmig ausgebildete Wirkbereich II. Die Wirkbereiche I, II und II wirken in eine Wirkrichtung x auf das zu bearbeitende Material ein. In der Figur 2b ist die durch die Wirkbereiche I und III gebildete Zentrierspitze 13 vergrößert dargestellt.

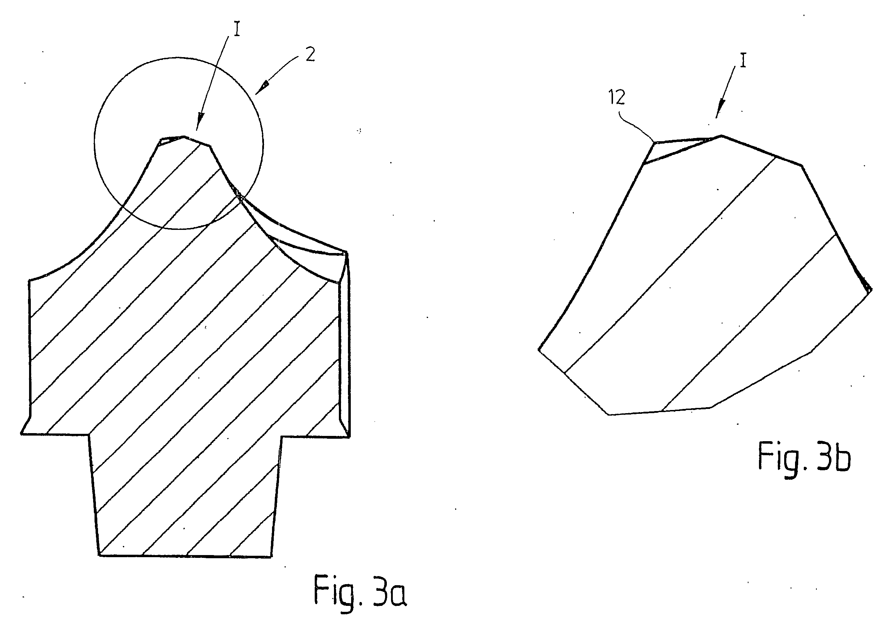

In der Figur 3a ist ein weiterer Schnitt durch den in der Figur 1 dargestellten Vollhartmetallkopf 2 abgebildet. Der Schnitt verläuft entlang der Schnittlinie C-C. Eine Detailansicht 3b zeigt die Schneidkante 12 im Wirkbereich I des Vollhartmetallkopfs 2.

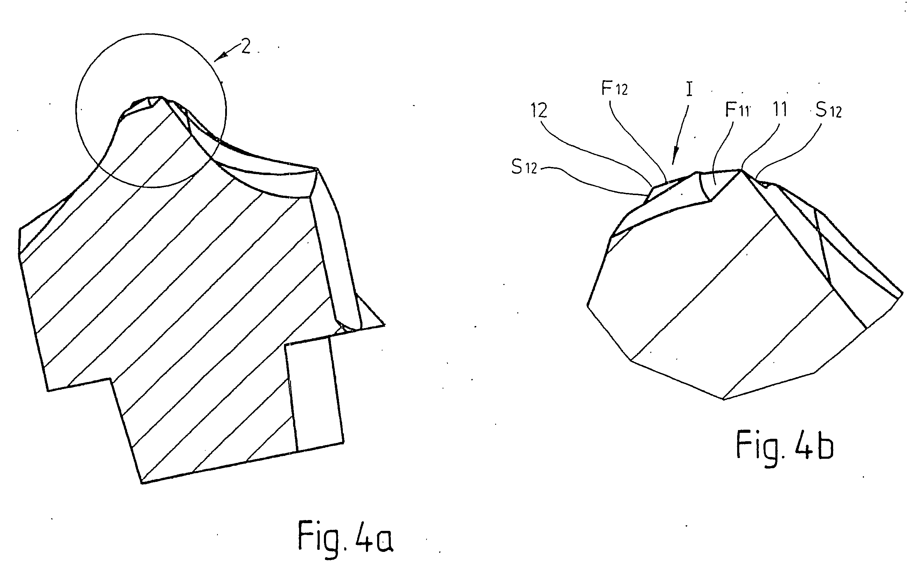

Die Figur 4a zeigt einen weiteren Schnitt durch den in der Figur 1 dargestellten Vollhartmetallkopf 2. Der Schnitt verläuft entlang der Schnittlinie D-D. Ein Detail dieser Schnittansicht (siehe Figur 4b) zeigt einen Abschnitt der Schneidkante 11 und Teile der zu dieser gehörenden Spanfläche S₁₁ und Freifläche F₁₁. Die Schneidkante 12 mit zugehöriger Spanfläche S₁₂ und zugehöriger Freifläche F₁₂ ist im Wirkbereich I ebenfalls sichtbar.

In der Figur 5a ist schließlich ein etwa entsprechend der in der Figur 1 gezeigten Schnittlinie A-A ausgeführter Schnitt durch den Vollhartmetallkopf 2 dargestellt. In dieser Ansicht ist die Hauptschneidkante 8 und ein Teil der vorgelagerten Freifläche F8 sichtbar. Weiterhin ist der imaginäre Kegel K angedeutet, durch welchen die Teilmantelflächen 5 und 6 definiert sind. Die Hauptschneidkante 8 läuft bis an den Wirkbereich III heran (siehe Figur 5b) und wird in diesem durch eine Kante 8' fortgesetzt, welche wiederum in die Schneidkante 12 des Wirkbereichs I .übergeht. Die Teilmantelfläche 5 und 6 verlaufen jeweils in einem Winkel α = 10° zu der Längsachse L.

In der Figur 6 ist eine Seitenansicht auf den in der Figur 1 dargestellten Vollhartmetallkopf 2 aus einer Pfeilrichtung E dargestellt. Zwischen der Hauptschneidkante 7 und der Nebenschneidkante 10 bilden die Freifläche F₇ der Hauptschneidkante 7 und die Spanfläche S₁₀ der Nebenschneidkante 10 eine muldenartig gewölbte Flanke MF₇₋₁₀, welche radial nach außen durch die Klothoide K₇ begrenzt ist und an dieser parallel zur Längsachse L abfällt. Durch die Spanfläche S₇ der Hauptschneidkante 7 und die Freifläche F₉ der Nebenschneidkante 9 ist zwischen der Hauptschneidkante 7 und der Nebenschneidkante 9 ebenfalls eine muldenartig gewölbte Flanke MF₇₋₉ gebildet, wobei die Hauptschneidkante 7 einen negativen Spanwinkel γ₁, aufweist. Die beiden Flanken MF₇₋₁₀ und MF₇₋₉ steigen im Wirkbereich II zum Wirkbereich III hin an. Bei einer Betrachtung des Vollhartmetallkopfs 2 aus einer der Pfeilrichtung E entgegengesetzten Richtung ergibt sich aufgrund der punktsymmetrischen Ausbildung des Hartmetallkopfs 2 eine entsprechende Ansicht. Im Wirkbereich II ist die Teilmantelfläche 5 sichtbar, welche zum Wirkbereich I hin durch die Freifläche F₁₁ der im Wirkbereich I liegenden Schneidkante 11 begrenzt ist. Weiterhin ist auch die Spanfläche S₁₁ sichtbar. Mit einem Doppelpfeil ist der Höhenunterschied H_{I-II} angedeutet, welcher zwischen den Wirkbereichen I und II besteht und durch den Wirkbereich III und insbesondere dessen Teilmantelflächen überbrückt wird.

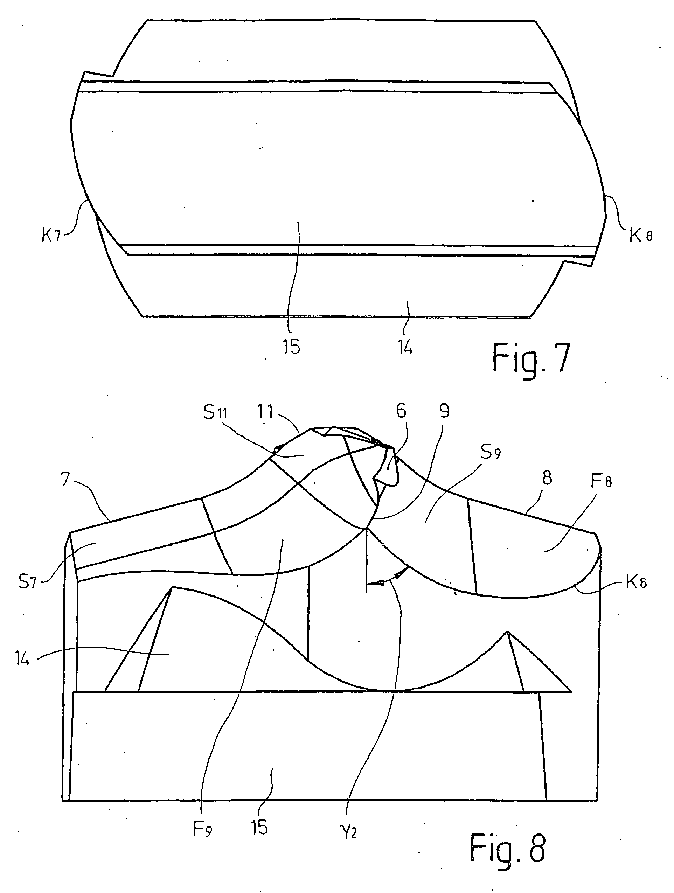

In der Figur 7 ist eine Unteransicht des in der Figur 1 dargestellten Vollhartmetallkopfs 2 gezeigt. In dieser Ansicht ist ein unter einem Unterbau 15 angeordneter Fuß 14 zu sehen, mit welchem der Vollhartmetallkopf in einem Schlitz eines nicht dargestellten Wendelschafts befestigt ist. Seitlich sind der Fuß und der Unterbau in einem mittleren Bereich klothoidenförmig gewölbt.

In der Figur 8 ist der in der Figur 1 dargestellte Vollhartmetallkopf 2 in einer Seitenansicht aus einer Pfeilrichtung F dargestellt. Diese Ansicht zeigt auch den Fuß 15 und den massiven Unterbau 14 des Vollhartmetallkopfs 2. In der Seitenansicht ist erkennbar, dass auch die Nebenschneidkante 11 einen negativen Spanwinkel γ₂ aufweist.

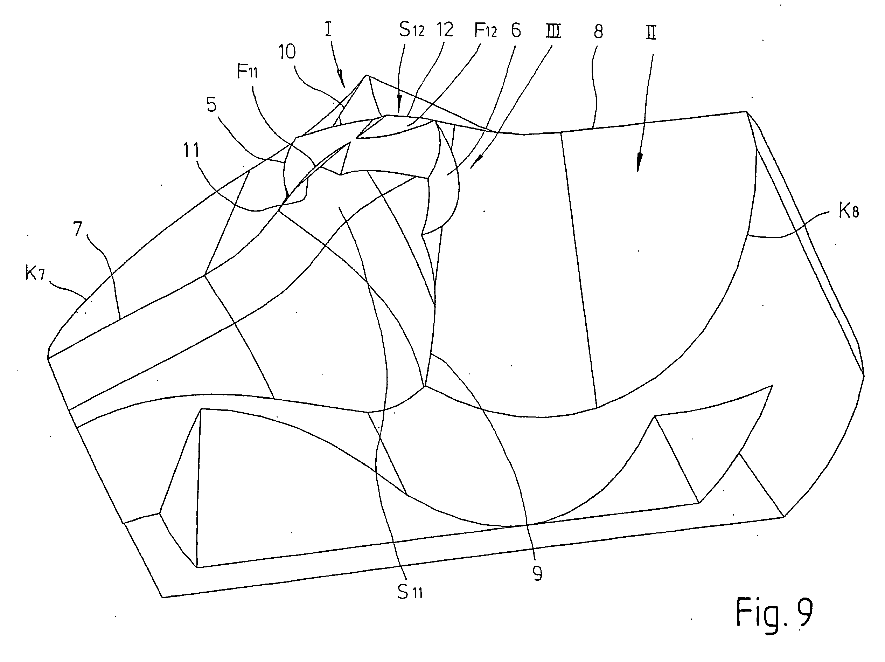

Die Figur 9 zeigt eine erste perspektivische Ansicht des in der Figur 1 gezeigten Vollhartmetallkopfs 2. In dieser Ansicht sind die beiden Schneidkanten 11 und 12 des ersten Wirkbereichs I mit den zugehörigen Spanflächen S₁₁ bzw. S₁₂ und den zugehörigen Freiflächen S₁₁ bzw. S₁₂ sichbar. Der dritte Wirkbereich III, welcher sich ringförmig um den ersten Wirkbereich I legt wird von den beiden Teilmantelflächen 5 und 6 dominiert und geht in den zweiten Wirkbereich II über. In der perspektivischen Darstellung ist hinter dem ersten Wirkbereich I auch ein Abschnitt der Nebenschneidkante 10 sichtbar. Radial nach außen sind die zwischen den Schneidkanten 8 und 9 bzw. 7 und 10 angeordneten muldenförmigen Flanken MF₈₋₉ bzw. MF₇₋₁₀ durch Kanten K₇ bzw. K₈ begrenzt, welche in Draufsicht klothoidenförmig verlaufen.

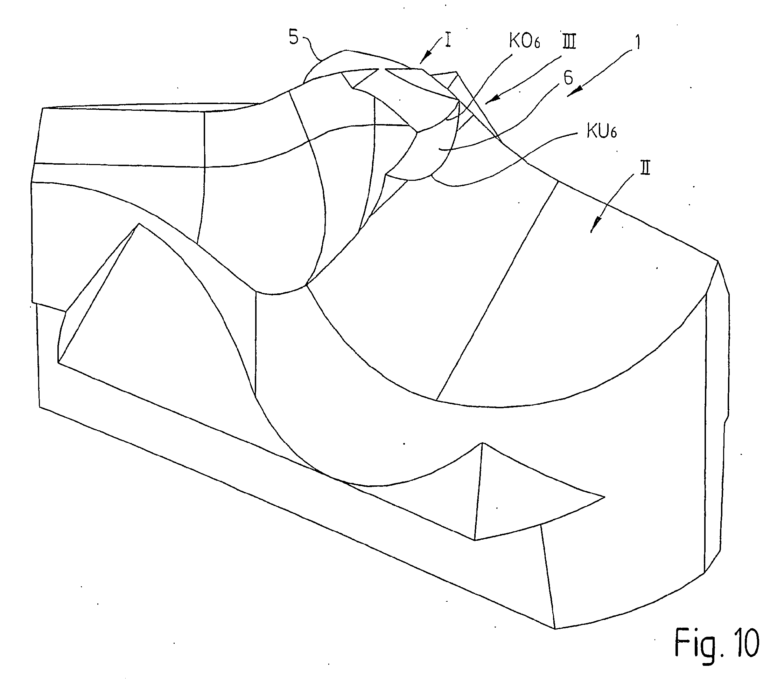

Die Figur 10 zeigt eine zweite perspektivische Ansicht des in der Figur 1 gezeigten Vollhartmetallkopfs 2. Die im Wirkbereich III angeordnete Teilmantelfläche 6 geht an einer oberen Kante KO₆ in den Wirkbereich I und an einer unteren Kante KU₆ in den Wirkbereich II über. Die Kanten KO₆ und KU₆ sind als Kurven ausgeführt.

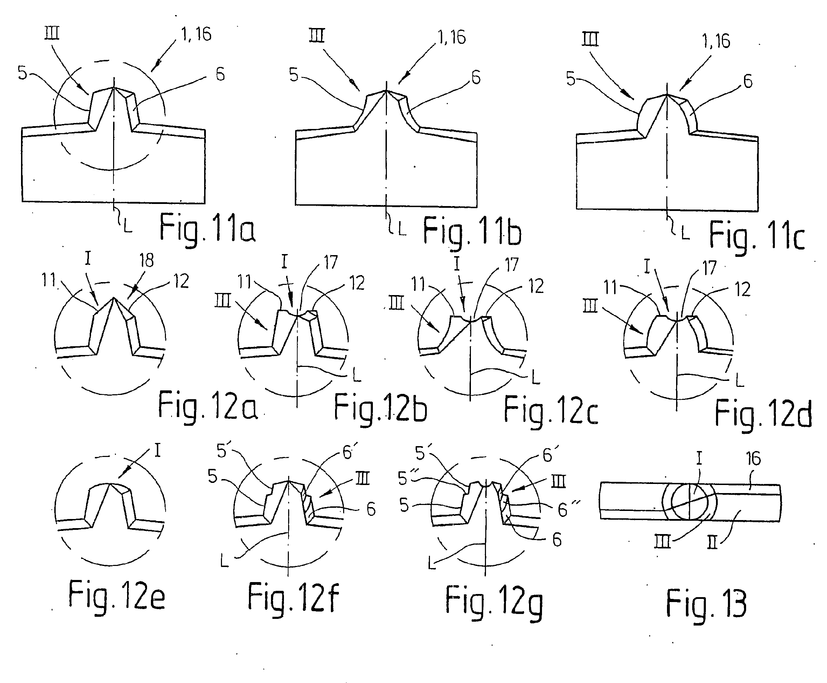

Die Figuren 11a bis 11c zeigen drei Hartmetallschneidelemente 1, welche als Hartmetallschneidplatten 16 ausgebildet sind und unterschiedliche dritte Bereiche III aufweisen. Teilmantelflächen 5 und 6 der in der Figur 11a dargestellten Hartmetallschneidplatte 16 sind Teilflächen eines imaginären geraden Kreiskegels, dessen Mittelachse mit einer Längsachse L der Hartmetallschneidplatte 16 zusammenfällt. Die Figur 11b zeigt eine Hartmetallschneidplatte 16, die in einem Wirkbereich III Teilflächen 5 und 6 eines geraden Kreiskegels mit einer zur Längsachse gewölbten bzw. konkave Mantelfläche aufweist. Im Gegensatz hierzu sind Teilflächen 5 und 6 einer in der Figur 11c gezeigten Hartmetallschneidplatte 16 als Teilflächen eines imaginären geraden Kreiskegels mit einer konvex bzw. nach außen gewölbten Mantelfläche ausgebildet.

Die Figuren 12a bis 12e zeigen mit Bezug zu den Figuren 11a bis 11c verschiednen Ausführungsvarianten für den Wirkbereich 1 der Hartmetallschneidplatte 16. Die Figur 12 a zeigt einen Wirkbereich I, bei welchem Schneidkanten 11 und 12 eine Dachförmige Spitze 18 bilden. Die Figuren 12b bis 12d zeigen jeweils einen Wirkbereich I, welcher durch zwei senkrecht zu einer Längsachse L liegende Schneidkanten 11 und 12 und einen zentrisch angeordneten Rücksprung 17 definiert sind, wobei die Wirkbereiche III entsprechend den Figuren 11a bis 11c ausgeführt sind.

Die Figur 12 e zeigt einen kuppelförmigen Wirkbereich I. Die Figuren 12f und 12g zeigen Wirkbereiche III, welche jeweils vier Teilmantelflächen 5, 5', 6 und 6' aufweisen, wobei die Teilmantelflächen 5 und 6 auf einem ersten imaginären geraden Kreiskegel und die Teilmantelflächen 5' und 6' auf einem zweiten imaginären Kreiskegel liegen und der zweite Kreiskegel innerhalb des ersten Kreiskegels angeordnet ist. Zwischen den Teilmantelflächen 5, 5', 6 und 6' entsteht somit jeweils ein Absatz 5" bzw. 6", welcher als Teilmantelfläche eines besonders flachen imaginären Kegels ausgebildet ist. Gemäß einer nicht dargestellten Ausführungsvariante ist es vorgesehen, den Absatz senkrecht zu einer Längsachse der Hartmetallschneidplatte als Teilfläche eines Kreisrings auszubilden.

Die Figur 13 zeigt schließlich eine schematische Draufsicht auf die in den Figuren 11a bis 12g dargestellte Hartmetallschneidplatte 16 mit den drei Wirkbereichen I, II und III.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Hartmetallschneidelement
- 2: Vollhartmetallkopf
- 3: Bohrerkopf
- 4: Hammerbohrer / Bohr- und/oder Meißelwerkzeug
- 5: erste Teilmantelfläche im Wirkbereich III
- 5', 5": weitere Teilmantelfläche bzw. Absatz
- 6: zweite Teilmantelfläche im Wirkbereich III
- 6', 6": weitere Teilmantelfläche bzw. Absatz
- 7, 8: Hauptschneidkante im Wirkbereich II
- 8': Kante als Fortsetzung von 8
- 9, 10: Nebenschneidkante im Wirkbereich II
- 11, 12: Schneikante im Wirkbereich I
- 13: Zentrierspitze
- 14: Unterbau von 2
- 15: Fuß von 2
- 16: Hartmetallschneidplatte
- 17: Rücksprung im Wirkbereich I
- 18: dachförmige Spitze im Wirkbereich I
- I, II, III: erster, zweiter bzw. dritter Wirkbereich
- α: Winkel zischen 5 bzw. 6 und L
- γ1, γ1: Spanwinkel bei 7, 8 bzw. 9, 10
- F₇-F₁₂: Freifläche von 7, 8, 9, 10, 11 bzw. 12
- H_{I-II}: Höhendifferenz zwischen Wirkbereich I und II
- K: imaginärer Kegel
- KO₆, KU₆: obere bzw. untere Kante von 6
- K₇, K₈: Klothoide
- L: Längsachse von 4
- L₇, L₈: exzentrische Drehachse parallel zu L
- MF₇₋₉: muldenförmige Flanke zwischen 7 und 9
- MF₇₋₁₀: muldenförmige Flanke zwischen 7 und 10
- MF₈₋₉: muldenförmige Flanke zwischen 8 und 9
- S₇-S₁₂: Spanfläche von 7, 8, 9, 10, 11 bzw. 12
- x: Wirkrichtung

## Patentansprüche

1. Bohr- und/oder Meißelwerkzeug (4), insbesondere zur Bearbeitung von Beton, Gestein, Mauerwerk und der gleichen Materialien, mit einem bearbeitungsseitig vorgesehenen Hartmetallschneidelement (1), wobei ein radial außen liegender, zweiter Wirkbereich (II) des Hartmetallschneidelements (1) gegenüber einem zentrischen, ersten Wirkbereich (I) des Hartmetallschneidelements (1) zurückversetzt ist und die beiden Wirkbereiche (I, II) über einen dritten Wirkbereich (III) ineinander übergehen, **dadurch gekennzeichnet, dass** der dritte Wirkbereich (III) wenigstens teilweise durch wenigstens eine Teilmantelfläche (5, 6) wenigstens einer Kegel- und/oder Kugelmantelfläche (K) gebildet ist.

2. Bohr- und/oder Meißelwerkzeug nach einem der vorhergehenden Ansprüche, **dadurch gekennzeichnet, dass** die Teilmantelfläche (5, 6) konkav oder konvex gewölbt ist.

3. Bohr- und/oder Meißelwerkzeug nach einem der vorhergehenden Ansprüche, **dadurch gekennzeichnet, dass** der dritte Wirkbereich (III) wenigstens zwei Teilmantelflächen (5, 6) aufweist, welche symmetrisch zu einer Längsachse (L) des Bohr- und/oder Meißelwerkzeugs (4) angeordnet sind.

4. Bohr- und/oder Meißelwerkzeug nach einem der vorhergehenden Ansprüche, **dadurch gekennzeichnet, dass** die Teilmantelfläche (5, 6) in Wirkrichtung (x) durch bogenförmig verlaufende Kanten (KO₆, KU₆) mit unterschiedlicher Krümmung begrenzt ist.

5. Bohr- und/oder Meißelwerkzeug nach einem der vorhergehenden Ansprüche, **dadurch gekennzeichnet, dass** die Teilmantelfläche (5, 6) zu der Längsachse (L) des Bohr- und/oder Meißelwerkzeugs (4) einen Winkel (α) zwischen 0° < α < 45° und insbesondere zwischen 5° und 25° aufweist.

6. Bohr- und/oder Meißelwerkzeug nach einem der vorhergehenden Ansprüche, **dadurch gekennzeichnet, dass** der zentrische erste Wirkbereich (I) und der dritte Wirkbereich (III) zusammen eine Zentrierspitze (13) bilden, welche über den außen liegenden, zweiten Wirkbereich (II) in die Wirkrichtung (x) der Bohr- und/oder Meißelwerkzeugs (4) vorsteht.

7. Bohr- und/oder Meißelwerkzeug nach einem der vorhergehenden Ansprüche, **dadurch gekennzeichnet, dass** Scheidkanten (11, 12) des zentrischen, ersten Wirkbereichs (I) einen dachförmigen Verlauf aufweisen.

8. Bohr- und/oder Meißelwerkzeug nach einem der vorhergehenden Ansprüche, **dadurch gekennzeichnet, dass** Hauptscheidkanten (7, 8) des radial außen liegenden, zweiten Wirkbereichs (II) einen dachförmigen Verlauf aufweisen.

9. Bohr- und/oder Meißelwerkzeug nach einem der vorhergehenden Ansprüche, **dadurch gekennzeichnet, dass** das Hartmetallschneidelement (1) als Vollhartmetallkopf (2) oder als Hartmetallscheidplatte (16) ausgebildet ist.

10. Bohr- und/oder Meißelwerkzeug nach einem der vorhergehenden Ansprüche, **dadurch gekennzeichnet, dass** das Hartmetallschneidelement (1) mehrteilig ausgebildet ist und insbesondere aus wenigstens einer Scheidplatte und einer Zentrierspitze besteht.

11. Bohr- und/oder Meißelwerkzeug nach einem der vorhergehenden Ansprüche, **dadurch gekennzeichnet, dass** der Hauptschneidkante (7, 8) des zweiten Wirkbereichs (II) eine Freifläche (F₇, F₈) zugeordnet ist, welche radial nach außen in Draufsicht durch eine Klothoide (K₇, K₈) oder einen dieser angenäherten Polygonzug begrenzt ist.

12. Bohr- und/oder Meißelwerkzeug nach einem der vorhergehenden Ansprüche, **dadurch gekennzeichnet, dass** eine Weiterführung der Klothoide (K₇, K₈) bzw. des Polygonzugs eine Spanfläche (S₉, S₁₀) einer im zweiten Wirkbereich (II) angeordneten Nebenschneide (9, 10) radial nach außen begrenzt.

13. Bohr- und/oder Meißelwerkzeug nach einem der vorhergehenden Ansprüche, **dadurch gekennzeichnet, dass** die Freifläche (F₇, F₈) der Hauptschneidkante (7, 8) des zweiten Wirkbereichs (II) und die Schneidfläche (S₉, S₁₀) der Nebenschneide (9, 10) des zweiten Wirkbereichs (II) eine gemeinsame, kantenlose, gewölbte Fläche (MF₇₋₉, MF₈₋₁₀) bilden.

14. Bohr- und/oder Meißelwerkzeug nach einem der vorhergehenden Ansprüche, **dadurch gekennzeichnet, dass** der Nebenschneidkante (9, 10) des zweiten Wirkbereichs (II) eine Freifläche (F₉, F₁₀) zugeordnet ist, welche radial nach außen in Draufsicht durch eine Forstsetzung der Klothoide (K₇, K₈) oder des dieser angenäherten Polygonzugs begrenzt ist.

15. Bohr- und/oder Meißelwerkzeug nach einem der vorhergehenden Ansprüche, **dadurch gekennzeichnet, dass** die Spanflächen (S₇, S₈, S₉, S₁₀) und die Freiflächen (F₇, F₈, F₉, F₁₀) der Hauptschneiden (7, 8) und der Nebenschneiden (9, 10) des zweiten Wirkbereichs (II) in Draufsicht etwa eine s-förmige Kontur aufweisen.

## Claims

1. Drilling and/or chiselling tool (4), in particular for the working of concrete, rock, masonry and similar materials, having a hard metal cutting element (1) provided on the working side, in conjunction with which a radially externally located, second working area (II) of the hard metal cutting element (1) is set back in relation to a centrical, first working area (I) of the hard metal cutting element (1), and the two working areas (I, II) graduate into one another via a third working area (III), **characterized in that** the third working area (III) is formed at least partially by at least one partial envelope surface (5, 6) of at least one conical surface and/or conical envelope surface (K).

2. Drilling and/or chiselling tool according to the foregoing claim, **characterized in that** the partial envelope surface (5, 6) exhibits concave or convex curvature.

3. Drilling and/or chiselling tool according to one of the foregoing claims, **characterized in that** the third working area (III) exhibits at least two partial envelope surfaces (5, 6), which are arranged symmetrically in relation to a longitudinal axis (L) of the drilling and/or chiselling tool (4).

4. Drilling and/or chiselling tool according to one of the foregoing claims, **characterized in that** the partial envelope surface (5, 6) is delimited in the effective direction of cut (x) by edges (KO₆, KU₆) with different curvature running in the form of an arch.

5. Drilling and/or chiselling tool according to one of the foregoing claims, **characterized in that** the partial envelope surface (5, 6) exhibits an angle (a) between 0° < a < 45° and in particular between 5° and 25 ° in relation to the longitudinal axis (L) of the drilling and/or chiselling tool (4).

6. Drilling and/or chiselling tool according to one of the foregoing claims, **characterized in that** the centrical, first working area (I) and the third working area (III) together form a centring tip (13), which projects beyond the externally located, second working area (II) in the direction of cut (x) of the drilling and/or chiselling tool (4).

7. Drilling and/or chiselling tool according to one of the foregoing claims, **characterized in that** cutting edges (11, 12) of the centrical, first working area (I) exhibit a roof-shaped path.

8. Drilling and/or chiselling tool according to one of the foregoing claims, **characterized in that** main cutting edges (7, 8) of the radially externally located, second working area (II) exhibit a roof-shaped path.

9. Drilling and/or chiselling tool according to one of the foregoing claims, **characterized in that** the hard metal cutting element (1) is executed as a solid hard-metal head (2) or as a hard metal cutting body (16).

10. Drilling and/or chiselling tool according to one of the foregoing claims, **characterized in that** the hard metal cutting element (1) is executed in several parts and in particular from at least one cutting body and one centring tip.

11. Drilling and/or chiselling tool according to one of the foregoing claims, **characterized in that** a free face (F₇, F₈) is allocated to the main cutting edge (7, 8) of the second working area (II), which free face, when viewed from above, is delimited in a radial, outward direction by a clothoid (K₇, K₈) or a polygonal progression approximating thereto.

12. Drilling and/or chiselling tool according to one of the foregoing claims, **characterized in that** a continuation of the clothoid (K₇, K₈) or the polygonal progression delimits a chipping face (S₉, S₁₀) of a minor cutting edge (9, 10) arranged in the second working area (II) in a radial, outward direction.

13. Drilling and/or chiselling tool according to one of the foregoing claims, **characterized in that** the free face (F₇, F₈) of the main cutting edge (7, 8) of the second working area (II) and the chipping face (S₉, S₁₀) of the minor cutting edge (9, 10) of the second working area (II) together form a common, edgeless, curved face (MF₇₋₉, MF₈₋₁₀).

14. Drilling and/or chiselling tool according to one of the foregoing claims, **characterized in that** a free face (F₉, F₁₀) is allocated to the minor cutting edge (9, 10) of the second working area (II), which free face, when viewed from above, is delimited in a radial, outward direction by a continuation of the clothoid (K₇, K₈) or the polygonal progression approximating thereto.

15. Drilling and/or chiselling tool according to one of the foregoing claims, **characterized in that** the chipping faces (S₇, S₈, S₉, S₁₀) and the free faces (F₇, F₈, F₉, F₁₀) of the main cutting edges (7, 8) and the minor cutting edges (9, 10) of the second working area (II), when viewed from above, exhibit a more or less s-shaped contour.

## Revendications

1. Outil de perçage et/ou de ciselage (4), en particulier pour travailler du béton, de la pierre, de la maçonnerie et autres matériau analogues, comprenant un élément de coupe en métal dur prévu côté usinage (1), dont une deuxième zone d'action (II) de l'élément de coupe en métal dur (1) située radialement à l'extérieur est décalée vers l'arrière par rapport à une première zone d'action centrale (1) de l'élément de coupe en métal dur (1), les deux zones d'action (I, II) étant liées l'une à l'autre par l'intermédiaire d'une troisième zone d'action (III),
**caractérisé en ce que**
la troisième zone d'action (III) est formée au moins partiellement par au moins une surface d'enveloppe partielle (5, 6) d'au moins une surface d'enveloppe conique et/ou sphérique (K).

2. Outil de perçage et/ou de ciselage selon l'une des revendications précédentes,
**caractérisé en ce que**
la surface d'enveloppe partielle (5, 6) est concave ou convexe.

3. Outil de perçage et/ou de ciselage selon l'une des revendications précédentes,
**caractérisé en ce que**
la troisième zone active (III) présente au moins deux surfaces d'enveloppe partielles (5, 6) symétriques par rapport à un axe longitudinal (L) de l'outil de perçage et/ou de ciselage (4).

4. Outil de perçage et/ou de ciselage selon l'une des revendications précédentes,
**caractérisé en ce que**
la surface d'enveloppe partielle (5, 6) est limitée dans la direction d'action (x) par des arêtes (KO₆, KU₆) en forme d'arc de courbures différentes.

5. Outil de perçage et/ou de ciselage selon l'une des revendications précédentes,
**caractérisé en ce que**
la surface d'enveloppe partielle (5, 6) présente, par rapport à l'axe longitudinal (L) de l'outil de perçage et/ou de ciselage (4), un angle (α) compris entre 0° < α < 45° et en particulier entre 5° et 25°.

6. Outil de perçage et/ou de ciselage selon l'une des revendications précédentes,
**caractérisé en ce que**
la première zone d'action centrale (1) et la troisième zone d'action (III) forment conjointement une pointe de centrage (13) qui dépasse de la deuxième zone d'action extérieure (II) dans la direction d'action (x) de l'outil de perçage et/ou de ciselage (4).

7. Outil de perçage et/ou de ciselage selon l'une des revendications précédentes,
**caractérisé en ce que**
des arêtes de coupe (11, 12) de la première zone d'action centrale (I) présentent un tracé en forme de toit.

8. Outil de perçage et/ou de ciselage selon l'une des revendications précédentes,
**caractérisé en ce que**
les arêtes de coupe principales (7, 8) de la deuxième zone d'action extérieure (II) située radialement à l'extérieur, présentent un tracé en forme de toit.

9. Outil de perçage et/ou de ciselage selon l'une des revendications précédentes,
**caractérisé en ce que**
l'élément de coupe en métal dur (1) est en forme de tête pleine en métal dur (2) ou de plaquette de coupe en métal dur (16).

10. Outil de perçage et/ou de ciselage selon l'une des revendications précédentes,
**caractérisé en ce que**
l'élément de coupe en métal dur (1) est en plusieurs parties et composé en particulier d'au moins une plaquette de coupe et d'une pointe de centrage.

11. Outil de perçage et/ou de ciselage selon l'une des revendications précédentes,
**caractérisé en ce qu'**
à l'arête de coupe principale (7, 8) de la deuxième zone active (II) est associée une surface libre (F₇, F₈) délimitée radialement vers l'extérieur, vue de dessus, par une clothoïde (K₇, K₈) ou un tracé polygonal s'en rapprochant.

12. Outil de perçage et/ou de ciselage selon l'une des revendications précédentes,
**caractérisé en ce qu'**
une continuation de la clothoïde (K₇, K₈) ou du tracé polygonal délimite radialement vers l'extérieur une surface de coupe (S₉, S₁₀) d'une arête de coupe auxiliaire (9, 10) disposée dans la deuxième zone active (II).

13. Outil de perçage et/ou de ciselage selon l'une des revendications précédentes,
**caractérisé en ce que**
la surface libre (F₇, F₈) de l'arête de coupe principale (7, 8) de la deuxième zone active (II) et la surface de coupe (S₉, S₁₀) de l'arête de coupe auxiliaire (9, 10) de la deuxième zone active (II) forment une surface courbée commune sans arête (MF₇₋₉, MF₈₋₁₀).

14. Outil de perçage et/ou de ciselage selon l'une des revendications précédentes,
**caractérisé en ce qu'**
à l'arête de coupe auxiliaire (9, 10) de la deuxième zone active (II) est associée une surface libre (F₉, F₁₀) délimitée radialement vers l'extérieur, vue de dessus, par une continuation de la clothoïde (K₇, K₈) ou du tracé polygonal qui s'en rapproche.

15. Outil de perçage et/ou de ciselage selon l'une des revendications précédentes,
**caractérisé en ce que**
les surfaces de coupe (S₇, S₈, S₉, S₁₀) et les surfaces libres (F₇, F₈, F₉, F₁₀) des arêtes de coupe principales (7, 8) et des arêtes de coupe auxiliaires (9, 10) de la deuxième zone active (II) présentent, vues de dessus, un contour approximativement en forme de s.
